# EUROPÄISCHE PATENTSCHRIFT

(11) **EP 1 974 639 B1**
(45) Veröffentlichungstag und Bekanntmachung des Hinweises auf die Patenterteilung: **20.01.2010**
(21) Anmeldenummer: 07006382.1
(22) Anmeldetag: 28.03.2007
(51) Int. Cl.: A47J 37/01, A47J 37/06, F24B 1/00

(54) **Pizzabackvorrichtung**
Pizza baking device
Dispositif de préparation de pizza

(43) Veröffentlichungstag der Anmeldung: 01.10.2008
(73) Patentinhaber: Gegler, Constanze, 87740 Buxheim (DE)
(72) Erfinder: Gegler, Constanze, 87740 Buxheim (DE)
(74) Vertreter: Meyer, Thorsten

(56) Entgegenhaltungen:
- EP-A- 1 595 970
- DE-U1- 20 017 439
- US-A- 5 365 833
- US-A- 5 873 300

## Beschreibung

Die Erfindung betrifft eine Pizzabackvorrichtung zum Einsatz in einer Feuerstelle.

In vielen Haushalten sind Feuerstellen vorhanden, jedoch eignen diese sich nicht in einfacher Weise beliebte Speisen wie beispielsweise Holzofenpizza zuzubereiten. Aus US 5,365,833 ist eine Backvorrichtung bekannt, die Pizza mit Verbrennungsgasen erhitzt.

Aufgabe der Erfindung ist es eine Pizzabackvorrichtung zum Einsatz in einer Feuerstelle, die für viele unterschiedliche Gegebenheiten anpassbar ist und insbesondere eine einfache Handhabung ermöglicht.

Diese Aufgabe wird durch eine Pizzabackvorrichtung nach den Merkmalen des Anspruchs 1 gelöst.

Erfindungsgemäß ist eine Pizzabackvorrichtung zum Einsatz in einer Feuerstelle vorgeschlagen, mit einer Gestellgrundplatte an der diese tragende Stellfüße einstellbar befestigt sind, mit einem Wärmespeicherplattengestell, welches abnehmbar auf der Gestellgrundplatte ruht und durch dieses unterstützt wird, wobei das Wärmespeicherplattengestell zur unterstützenden Aufnahme einer Wärmespeicherplatte oder einer Grillplatte dient.

Das Pizzagestell ermöglicht es dem Benutzer in seiner bestehenden Feuerstelle ohne Umrüstung dieser eine echte Holzofenpizza zu backen.

Durch die Bauform und die einstellbaren Füße ist eine Anpassung auf unterschiedliche Geometrien und Gegebenheiten der Feuerstelle möglich, so sind nahe zu alle für mit Holz befeuerte Feuerstätten, Kachelöfen, Heizkamine, Kaminöfen, offene Kamine, Gartengrills, Grillkamine und weitere geeignet, um nun für die Herstellung einer Pizza verwendet werden zu können.

Durch die Einstellung ist nicht nur eine Anpassung an einen Feuerraum beispielsweise eines Kaminofens möglich, hierbei ist oftmals eine Vorrichtung zur Ascheabführung im Boden des Feuerraums vorgesehen, auf dem die Stellfüße nicht abgestellt werden sollten, sondern auch auf den Brennstoff selbst. So kann bei einer Glut eine andere Höhe gewählt werden als bei einem lodernden Holzfeuer.

Durch die Anordnung mit Gestellgrundplatte und einem darüber angeordneten Wärmespeicherplattengestell entsteht ein durch diese eingegrenzter Raum, der der Wärmeverteilung und Pufferung dient. Zum Backen werden so die benötigten hohen Temperaturen bereitgestellt (200° bis 400° Celsius) um den typischen Holzofengeschmack zu erzielen.

Die Wahl einer diese Wärme speichernden und verteilenden Wärmespeicherplatte gelingt das Backen einfach und schnell.

Durch die Wahlmöglichkeit des Einsatzes einer Grillplatte können weitere Speisen neben Pizza zubereitet werden, was das. Grillen von Wüstchen, Steaks in der Wohnung möglich macht ohne die üblichen Verschmutzungen und Gerüche, da die Klappe des Kaminofens geschlossen werden kann.

Die Grillplatte kann hierzu als Rost oder als Lochblech ausgebildet sein.

Eine besonders vorteilhafte und bevorzugte Weiterbildung der Erfindung sieht vor, dass die Stellfüße in ihrer Länge und/oder in ihrer Position an der Gestellgrundplatte einstellbar sind, wobei hierzu in der Gestellgrundplatte Langlöcher ausgebildet sind, an denen die Füße vermittels einer Klemm- oder Schraubverbindung festlegbar sind.

Ein Vorteil der Langlöcher, die insbesondere flächendeckend nebeneinander liegend in verschiedenen Orientierungen vorgesehen sind, liegt darin, dass so eine sehr vielfältige Einstellungsmöglichkeit für die Befestigung und damit geometrische Anordnung der Stellfüße ermöglicht ist. Hierdurch kann auf fast jede örtliche Gegebenheit mit einer individuellen Einstellung eingegangen werden, um einen optimalen und sicheren Stand der Gestellgrundplatte und damit der ganzen Pizzabackvorrichtung sicher zu stellen. So unterscheidet sich gerade bei Kaminöfen zu Heizkaminen die Grundfläche gravierend. Während im Heizkamin in der Regel viel Grundfläche gegeben ist, muss bei kleinen Kaminöfen mit sehr wenig Platz aufgekommen werden.

Die Langlöcher an der Gestellgrundplatte haben zu dem den Vorteil, dass die durch diese durchbrochene Platte als Strahlungsschild für die direkte Wärmestrahlung zum einen dient aber auch die Wärme hindurch lässt, um in dem bereits erwähnten eingegrenzten Raum gestaut zu werden.

Eine ebenso bevorzugte Ausgestaltung sieht vor, dass die Stellfüße an ihrem Ende von diesen wegragende L-förmige Fortsätze aufweisen, wobei diese an den Stellfüßen um die Vertikal-Achse drehbar und insbesondere mittels einer Kontermuttern gegenüber den Stellfüßen festlegbar ausgestaltet sind. Hierdurch kann noch besser auf die Anordnung und Eigenschaft des verwendeten Brennstoffs (zusammengesackte Glut, lodernd brennendes Holz, ...) eingegangen werden. Bei Vorhandensein von einem - rotierbaren oder festen - Ascherostes im Boden des die Pizzabackvorrichtung aufnehmenden Feuerraums kann durch die das Feuer kann durch L-Winkel-förmigen Fortsätze insbesondere verbesserter Stand im engen Feuerraum gewährleistet werden.

Bevorzugterweise ist wenigstens ein Stellfuß in seiner Länge durch ein Schraubengewinde, das an der Gestellgrundplatte insbesondere durch die Klemm- oder Schraubverbindung in Zusammenwirkung mit den Langlöchern festlegbar ist, einstellbar, wobei der Stellfuß wenigstens teilweise durch eine Gewindestange ausgebildet ist. Hierdurch ist eine weite Höhenverstellbarkeit gesichert.

Nach einer besonders vorteilhaften und bevorzugten Ausgestaltung der Erfindung ist vorgesehen, dass eine Griffaufnahme in dem Wärmespeicherplattengestell und/oder der Gestellgrundplatte ausgebildet ist, in welcher ein hierzu vorgesehener Griff eingesteckt werden kann zum Anheben des Wärmespeicherplattengestells oder der Gestellgrundplatte oder der Gestellgrundplatte mit drauf liegendem Wärmespeicherplattengestell. Hierdurch lässt sich die zubereitete Nahrung und die heiße Wärmespeicherplatte aus dem befeuerten Feuerraum sicher und bequem herausnehmen, ohne dass die Gefahr von Beschädigungen oder Verletzungen besteht.

Dem folgend ist ein Griff vorgesehen, der abnehmbar in einer der Griffaufnahmen eingesteckt ist. Weiterhin weist der Griff von Vorteil eine Verlängerung auf, die an einer Halterung am Griff festgelegt werden kann. Es können auch mehrere Halterungen vorgesehen sein, sodass mehrere Verlängerungen gehaltert werden können, um eine Einhand oder eine Zweihandbedienung zu ermöglichen.

Die Griffaufnahme ist von Vorteil durch eine Hülse ausgebildet in die ein an dem Griff vorgesehener stabförmiger Fortsatz eingesteckt wird.

Eine bevorzugte Weiterbildung der Erfindung sieht vor, dass die Wärmespeicherplatte durch eine Specksteinplatte ausgebildet ist.

Von Vorteil ist Pizzabackvorrichtung an der der Griffaufnahme abgewandten Seite sich verjüngend ausgebildet.

Das Wärmespeicherplattengestell und/oder die Gestellgrundplatte weist nach einer vorteilhaften Ausgestaltung eine Einfassung zur Sicherung der Wärmespeicherplatte oder des Wärmespeicherplattengestells gegen seitliches Verrutschen auf.

Von Vorteil weist die Gestellgrundplatte an einer Seite eine aufragende Ausformung insbesondere in Form eine Anschlag-Platte auf. Hierdurch kann das Wärmespeicherplattengestell sicher platziert werden aber auch eine schwungvoll eingelegte Pizza kommt durch den so bereitgestellten Anschlag sicher zum liegen auf der Wärmespeicherplatte.

Bevorzugterweise ist die Pizzabackvorrichtung wenigstens teilweise aus Edelstahl ausgebildet.

Nachfolgend wird die Erfindung anhand der Zeichnungen weiter erläutert. Im Einzelnen zeigt die schematische Darstellung in:
- Fig. 1: eine schematische Aufsicht auf eine erfindungsgemäße Pizzabackvorrichtung von schräg vorne,
- Fig. 2: eine schematische Aufsicht auf eine erfindungsgemäße Pizzabackvorrichtung von schräg hinten,
- Fig. 3: eine schematische Aufsicht auf eine erfindungsgemäße Pizzabackvorrichtung von schräg unten,
- Fig. 4: eine schematische Aufsicht auf eine erfindungsgemäße Pizzabackvorrichtung von schräg vorne, wobei die Verlängerung des Griffs in einer anderen Halterung eingesteckt gezeigt ist,
- Fig. 5: eine schematische Ansicht der Einzelteile der Pizzabackvorrichtung aus einer ersten Ansicht,
- Fig. 6: eine schematische Ansicht der Einzelteile entsprechend Fig. 5 aus einer zweiten Ansicht,
- Fig. 7: eine schematische Aufsicht der Pizzabackvorrichtung von unten,
- Fig. 8: eine schematische Ansicht von unten auf das Wärmespeicherplattengestell,
- Fig. 9: eine schematische Ansicht von oben auf die Gestellgrundplatte,
- Fig. 10: eine schematische Ansicht des Griffs mit Fortsätzen und zwei Verlängerungen,
- Fig. 11: eine schematische Ansicht eines Stellfußes,
- Fig. 12: eine schematische Ansicht von oben auf einen an der Gestellgrundplatte montierten Stellfuß,
- Fig. 13: eine schematische Ansicht von unten auf Stellfuß aus Fig. 12,
- Fig. 14: eine schematische Ansicht der Wärmespeicherplatte,
- Fig. 15: eine schematische Ansicht der Grillplatte, und
- Fig. 16: eine schematische Aufsicht von schräg oben auf die Pizzabackvorrichtung mit darauf aufliegender Grillplatte.

Die in den Figuren gleichen Bezugsziffern bezeichnen gleiche oder gleich wirkende Elemente.

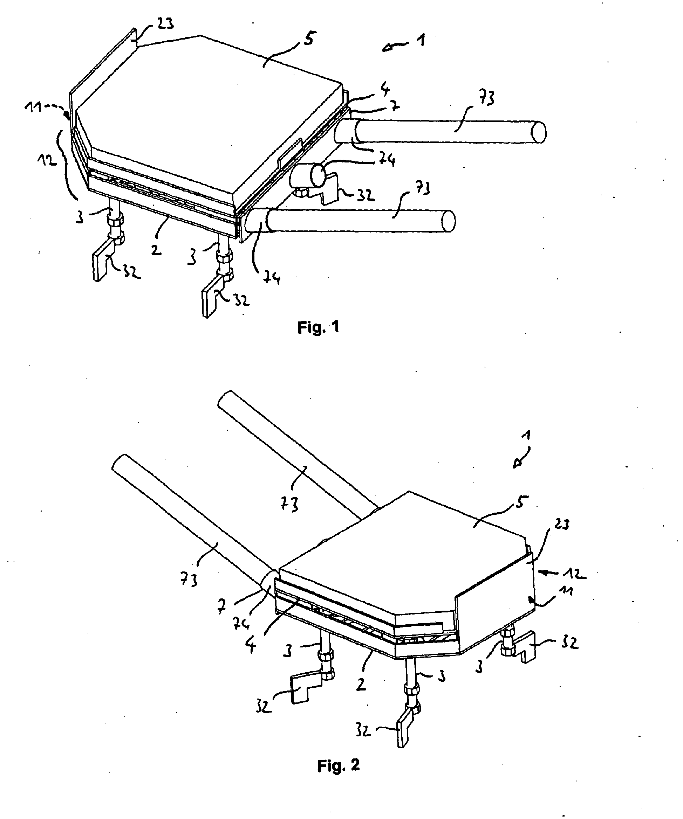

Fig. 1 zeigt eine Aufsicht einer erfindungsgemäßen Pizzabackvorrichtung 1, die in einer Feuerstelle zum Einsatz vorgesehen ist.

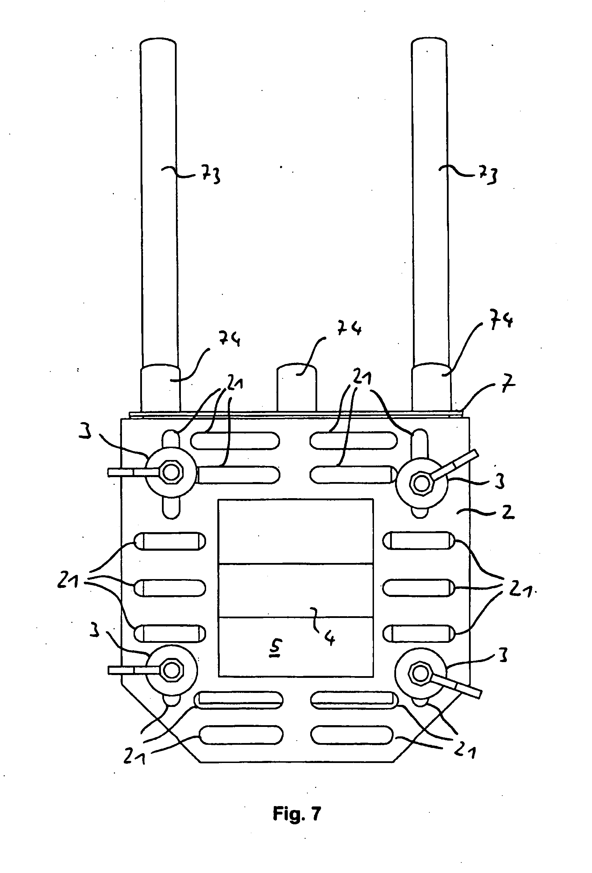

Die Pizzabackvorrichtung 1 weist eine Gestellgrundplatte 2 auf, an der diese tragende Stellfüße 3 einstellbar befestigt sind (siehe hierzu auch Fig. 7 und Fig. 11 bis 13).

Auf der Gestellgrundplatte 2 liegt ein abnehmbares Wärmespeicherplattengestell 4 auf. Das Wärmespeicherplattengestell 4 trät wiederum die Wärmespeicherplatte 5.

Die gezeigte Pizzabackvorrichtung 1 ist an der rückwärtigen Seite 11 sich zur Mitte mit Abflachungen 12 hin verjüngend ausgebildet, um in häufig vorkommende sich nach hinten hin verjüngende Feuerräume von Kaminöfen gut eingeführt werden zu können.

Fig. 2 zeigt die Anordnung in einer zweiten Ansicht.

Auf der Wärmespeicherplatte kann eine Pizza abgelegt werden, wobei die beispielsweise in einem Kaminofen vorherrschende Hitze die Pizza in wenigen Minuten fertig backen lässt.

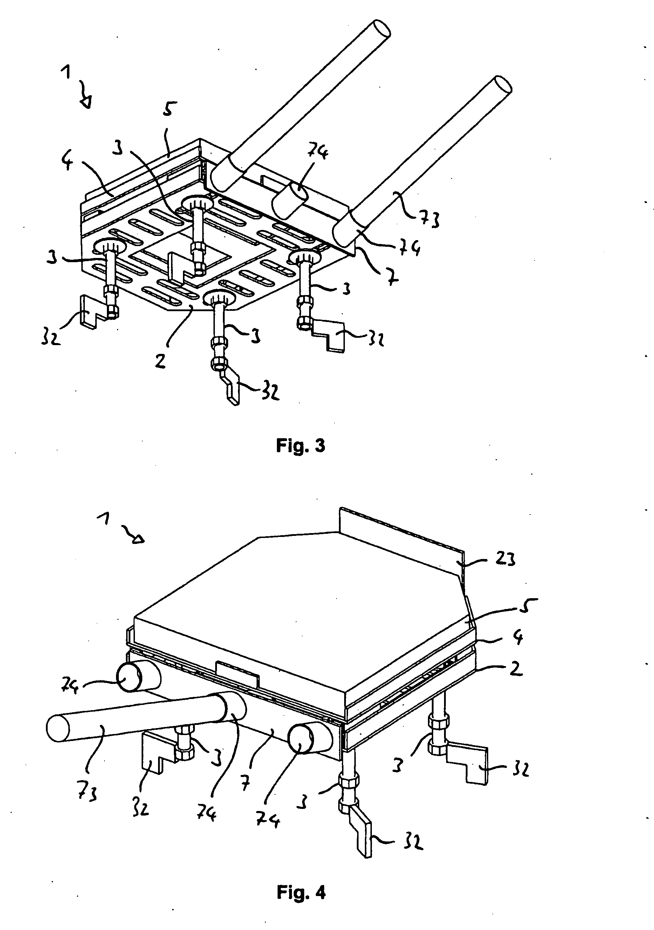

In Fig. 3 ist die Pizzabackvorrichtung von unten gezeigt. In dieser Ansicht kann man die in den Fig. 7 und Fig. 11 bis 13 näher erläuterten einstellbaren Stellfüßen deutlich sehen.

In dieser Ansicht ist auch der durch die Gestellgrundplatte 2 und das Wärmespeicherplattengestell 4 gebildeter Raum zwischen denselben zu erkennen.

In Fig. 4 ist eine schematische Aufsicht auf eine erfindungs-' gemäße Pizzabackvorrichtung von schräg vorne gezeigt, wobei die Verlängerung 73 des Griffs 7 in der mittleren Halterung 74 für eine Einhandbedienung eingesteckt gezeigt ist. Die Anderen Fig. zeigen eine Konfiguration für eine beidhändige Bedienung. Je eine Verlängerung 73 ist zum Greifen mit einer Hand vorgesehen.

Eine Einhandbedienung mit entsprechender Konfiguration ist dann sinnvoll, wenn keine zweite Person zum Öffnen einer Feuerraumklappe zugegen ist.

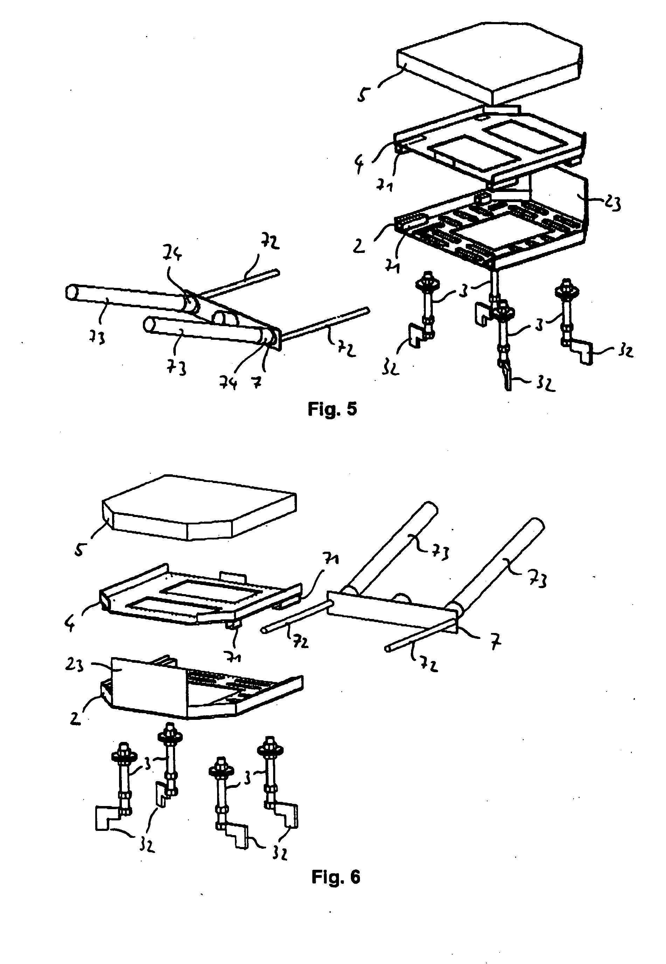

Fig. 5 zeigt eine schematische Ansicht der Einzelteile der Pizzabackvorrichtung aus einer ersten Ansicht und Fig. 6 in einer zweiten Ansicht von hinten.

Durch den Aufbau ist ein einzelnes Einbringen der Bestandteile zum einen der Gestellgrundplatte 2 mit der diese tragenden Stellfüße 3 und zum anderen des Wärmespeicherplattengestell 4 mit der Wärmespeicherplatte in den Ofen (nicht gezeigt) möglich.

Im folgenden wird eine mögliche Handhabung zum Pizzabacken erläutert:
Wenn nur noch starke Asche im Feuerraum vorhanden ist, wird diese ein wenig mit einem Metallschaber zur Seite geschoben. Dann wird die Gestellgrundplatte 2 und den bereits an dieser fest eingestellten Stellfüßen 3 mit dem Griff 7 in den Feuerraum gehoben und darin abgesetzt. Die stabförmigen Fortsätze 72 des Griffs 7 werden aus den Griffaufnahmen 71 der Gestellgrundplatte 2 herausgezogen.
Sodann wird das Wärmespeicherplattengestell 4 mit der Wärmespeicherplatte 5 (beispielsweise Specksteinplatte) ebenfalls mit dem Griff 7 im Ofen auf der Gestellgrundplatte 2 abgelegt, der Griffs 7 wieder herausgezogen und die Feuerraumklappe geschlossen.

Diese zwei-stufige Vorgehensweise birgt zwei Vorteile in sich:
- Bei einem Hebevorgang ist das Gewicht für den Hebenden nicht zu groß
- In der Regel ist der Speckstein nach der Zubereitung von mehreren Pizzas zum Backen zu heiß und muss kurzfristig zum Abkühlen aus dem Ofen genommen werden. Das gelingt einfach durch Abheben der Gestellgrundplatte mit dem Griff.

Das wäre problematisch, wenn man nun die komplette Pizzabackvorrichtung herausnehmen müsste.

Durch die Ausführung der Pizzabackvorrichtung aus zwei verschiedenen Platten welche zu einander versetzte Ausstanzungen aufweisen, wird ein zu starkes Aufheizen des Specksteins verhindert.

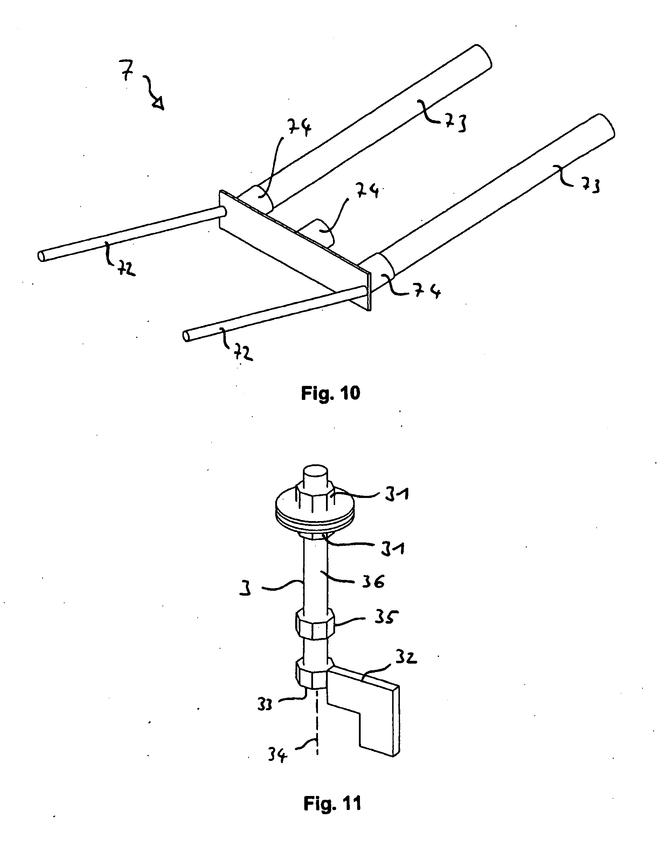

Fig. 7 zeigt eine Ansicht von unten auf die Pizzabackvorrichtung. Zu sehen ist die vielfältige Einstellmöglichkeit der Stellfüße 3 in ihrer Position an der Gestellgrundplatte 2 durch die zahlreichen Langlöcher 21, an denen die Stellfüße vermittels einer Schraubverbindung 31 (siehe Fig. 11 bis 13) festlegbar sind.

Diese Einstellung der Stellfüße ist für jeden Ofentyp einmal vorzunehmen und kann mittels der konternden Schrauben der Schraubenverbindung (siehe Fig. 11) fixiert werden.

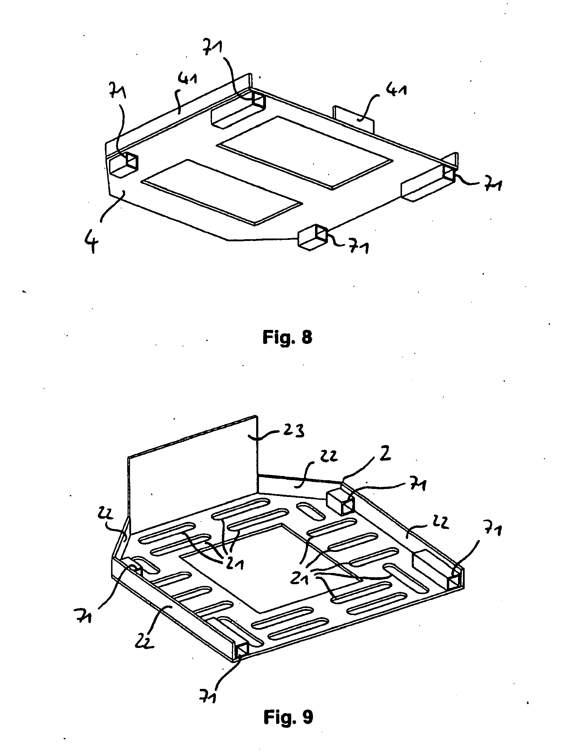

Die Fig. 8 und 9 zeigen das Wärmespeicherplattengestell 4 und die Gestellgrundplatte 2 einzeln im Detail.

Das Wärmespeicherplattengestell 4 und die Gestellgrundplatte 2 weisen jeweils eine Einfassung 41 und 22 zur Sicherung der Wärmespeicherplatte 5 oder des Wärmespeicherplattengestells 4 gegen seitliches Verrutschen auf.

Die Gestellgrundplatte 2 ist mit einer an der rückwärtigen Seite 11 aufragenden Ausformung in Form einer Anschlag-Platte 23 ausgestattet.

Es sind in den Fig. 8 und 9 auch die durch Hülsen ausgebildeten Griffaufnahmen 71 deutlich zu erkennen in die die stabförmigen Fortsäte 72 (siehe Fig. 10) des Griffs 7 zum Anheben, eingesteckt werden können.

In Fig. 11 ist demontierter ein Stellfuß 3 genauer dargestellt.

Die Höhenverstellbarkeit der Gestellgrundplatte ist aus zwei Gründen wichtig:
1. Verschiedenen Ofentypen haben andere Feuerraumhöhen, gerade der Höhenunterschied zwischen Türunterkante und Feuerraumboden. Bzw. Feuerraumboden zu ggf. Stehrost.
   Oft ist es aus Platzmangel notwendig das Wärmespeicherplattengestell über den Stehrost ausladen zu lassen.
2. Je nach gewünschter Backtemperatur kann die Pizzabackvorrichtung durch die Füße in ihrer Höhe über dem Brennstoff eingestellt werden. Hierbei kann davon ausgegangen werden, dass eine größere Höhe eine niedrigere Temperatur zur Folge hat.

Der Stellfuß 3 weist an seinem Ende 33 einen von diesem wegragenden L-förmigen Fortsatz 32 auf, wobei dieser an den Stellfuß um dessen Vertikal-Achse 34 drehbar und mittels einer Kontermutter 35 gegenüber Stellfuß festlegbar ausgestaltet ist.

Durch die Endungen der Stellfüße, die als L - Winkel ausgeformt sind, kann in Kombination mit der Gestellgrundplatte mit den darin ausgebildeten Langlöchern ein noch weiterer Einstellbereich der Stellfüße erreicht werden. Die Stellfüße werden entsprechend der Feuerraumgeometrie eingestellt und dann Langlöchern festgelegt. Die L-förmigen Fortsätze 32 sind um 360 Grad drehbar. Ein weiterer Vorteil der L-förmigen Fortsätze ist, dass Unebenheiten im Feuerraum oder Roste mit Schlitzen keinerlei Problem mehr darstellen. Der Fuß wird einfach so eingestellt, das er quer zum jeweiligen Rostschlitz steht.

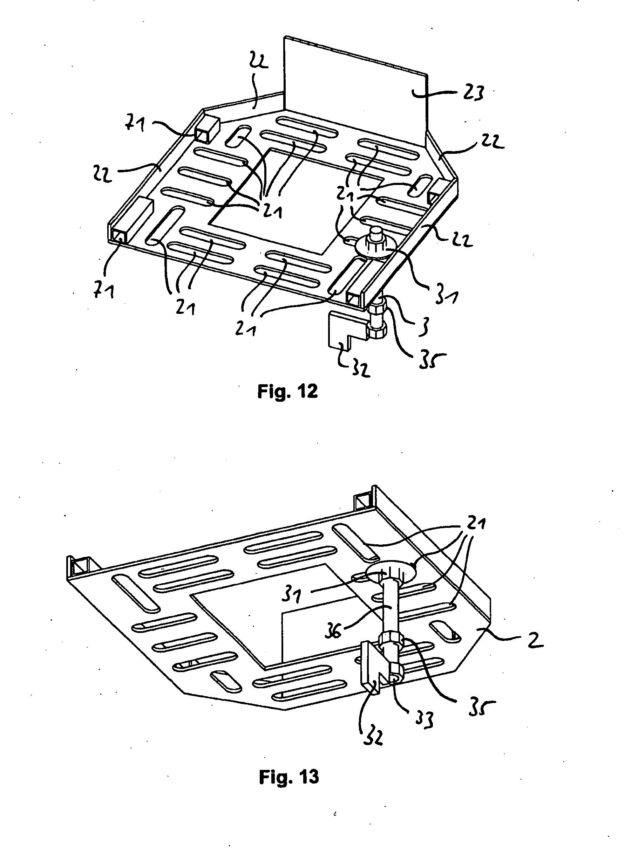

In den Fig. 12 und 13 ist die Befestigung eines Standfußes exemplarisch in einer Einstellung gezeigt.

Der Stellfuß 3 ist in seiner Länge durch ein Schraubengewinde, das an der Gestellgrundplatte 2 durch die Schraubverbindung 31 in Zusammenwirkung mit den Langlöchern 21 festlegbar ist, einstellbar. Der Stellfuß 3 ist dabei teilweise durch eine Gewindestange 36 ausgebildet.

Die Stellfüße bestehen aus einer Gewindestange, dem Winkelfuß an einer Muter angeschweißt, einer Kontermutter und zwei Muttern mit angeschweißter Beilagscheibe, Durch die Tatsache, dass der Winkelfuß nicht fest an der Gewindestange angebracht ist, sondern erst eingestellt und dann arretiert werden kann bringt den Vorteil, dass auch der Fuß noch in der Höhe verstellt werden kann.. Hierzu muss einfach die Winkelstange in die Mutter gedreht werden.

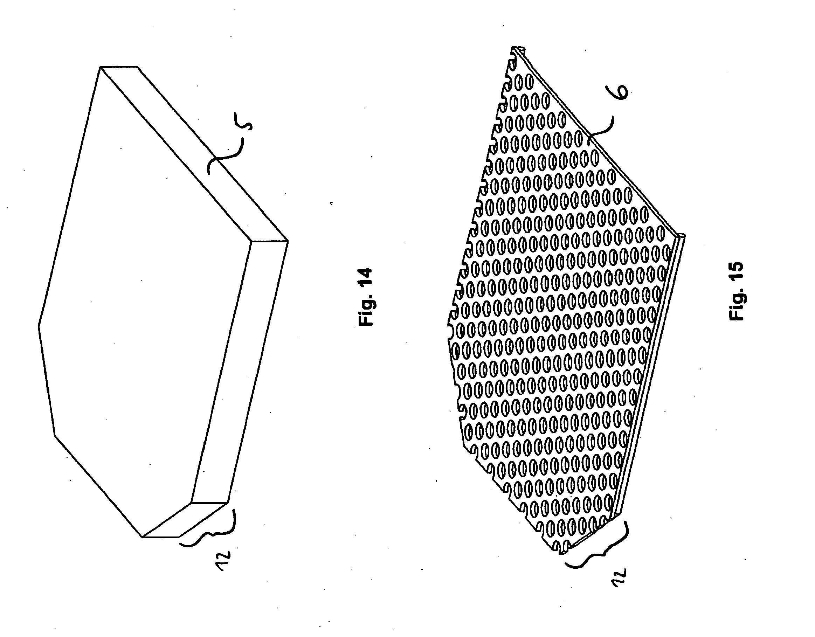

Fig. 14 und 15 zeigen die vorgeschlagenen Einsätze für das Wärmespeicherplattengestell in Form einer Wärmespeicherplatte 5 oder einer eines Grillplatte 6 in Form eines Lochblechs.

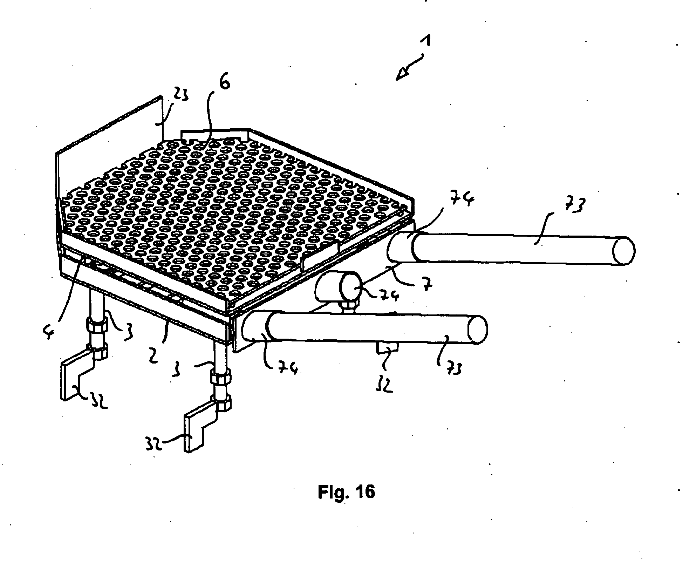

Schließlich zeigt Fig. 16 eine Ansicht einer Pizzabackvorrichtung mit auf der Gestellgrundplatte 2 ruhendem Wärmespeicherplattengestell 4 mit darin eingelegter Grillplatte 6. Der Griff 7 ist bereits in die Griffaufnahme eingesteckt, um die ganze Vorrichtung in einem Feuerraum abzusetzen.

### Bezugszeichenliste

- 1: Pizzabackvorrichtung
- 11: rückwärtige Seite
- 12: Abflachung

- 2: Gestellgrundplatte
- 21: Langloch
- 22: Einfassung
- 23: Anschlag-Platte

- 3: Stellfuß
- 31: Schraubverbindung
- 32: Fortsatz
- 33: Ende
- 34: Vertikal-Achse
- 35: Kontermutter
- 36: Gewindestange

- 4: Wärmespeicherplattengestell
- 41: Einfassung

- 5: Wärmespeicherplatte
- 6: Grillplatte

- 7: Griff
- 71: Griffaufnahme
- 72: stabförmiger Fortsatz
- 73: Verlängerung
- 74: Halterung

## Patentansprüche

1. Pizzabackvorrichtung (1) zum Einsatz in einer Feuerstelle, mit einer Gestellgrundplatte (2) an der diese tragende Stellfüße (3) einstellbar befestigt sind,
mit einem Wärmespeicherplattengestell (4), welches abnehmbar auf der Gestellgrundplatte ruht und durch dieses unterstützt wird, wobei das Wärmespeicherplattengestell (4) zur unterstützenden Aufnahme einer Wärmespeicherplatte (5) oder einer Grillplatte (6) dient.

2. Pizzabackvorrichtung nach Anspruch 1,
**dadurch gekennzeichnet,**
**dass** die Stellfüße (3) ihrer Länge und/oder in ihrer Position an der Gestellgrundplatte (2) einstellbar sind, wobei hierzu in der Gestellgrundplatte Langlöcher (21) ausgebildet sind, an denen die Stellfüße vermittels einer Klemm- oder Schraubverbindung (31) festlegbar sind.

3. Pizzabackvorrichtung nach Anspruch 1 oder 2,
**dadurch gekennzeichnet,**
**dass** die Stellfüße (3) an ihrem Ende (33) von diesen wegragende, insbesondere L-förmige, Fortsätze (32) aufweisen, wobei diese an den Stellfüßen um die Vertikal-Achse (34) drehbar und insbesondere mittels einer Kontermutter (35) gegenüber den Stellfüßen (3) festlegbar ausgestaltet sind.

4. Pizzabackvorrichtung nach einem der Ansprüche 1 bis 3,
**dadurch gekennzeichnet,**
**dass** wenigstens ein Stellfuß (3) in seiner Länge durch ein Schraubengewinde, das an der Gestellgrundplatte (2) insbesondere durch die Klemm- oder Schraubverbindung (31) in Zusammenwirkung mit den Langlöchern (21) festlegbar ist, einstellbar ist, wobei der Stellfuß (3) wenigstens teilweise durch eine Gewindestange (36) ausgebildet ist.

5. Pizzabackvorrichtung nach einem der vorhergehenden Ansprüche,
**dadurch gekennzeichnet,**
**dass** eine Griffaufnahme (71) in dem Wärmespeicherplattengestell (4) und/oder der Gestellgrundplatte (2) ausgebildet ist, in welcher ein hierzu vorgesehener Griff (7) eingesteckt werden kann zum Anheben des Wärmespeicherplattengestells (4) oder der Gestellgrundplatte (2) oder der Gestellgrundplatte mit drauf liegendem Wärmespeicherplattengestell (2 und 4).

6. Pizzabackvorrichtung nach Anspruch 5,
**dadurch gekennzeichnet,**
**dass** die Griffaufnahme (71) durch eine Hülse ausgebildet ist in die ein an dem Griff vorgesehener stabförmiger Fortsatz (72) eingesteckt wird.

7. Pizzabackvorrichtung nach einem der vorhergehenden Ansprüche,
**dadurch gekennzeichnet,**
**dass** die Wärmespeicherplatte (5) durch eine Specksteinplatte ausgebildet ist.

8. Pizzabackvorrichtung nach einem der Ansprüche 5 bis 7,
**dadurch gekennzeichnet,**
**dass** diese an der rückwärtigen Seite (11) sich zur Mitte mit Abflachungen (12) hin verjüngend ausgebildet ist.

9. Pizzabackvorrichtung nach einem der vorhergehenden Ansprüche,
**dadurch gekennzeichnet,**
**dass** das Wärmespeicherplattengestell (4) und/oder die Gestellgrundplatte (2) eine Einfassung (41, 22) zur Sicherung der Wärmespeicherplatte (5) oder des Wärmespeicherplattengestells (4) gegen seitliches Verrutschen aufweist.

10. Pizzabackvorrichtung nach einem der vorhergehenden Ansprüche,
**dadurch gekennzeichnet,**
**dass** die Gestellgrundplatte (2) an der rückwärtigen Seite (11) eine aufragende Ausformung insbesondere in Form einer Anschlag-Platte (23) aufweist.

11. Pizzabackvorrichtung nach einem der vorhergehenden Ansprüche,
**dadurch gekennzeichnet,**
**dass** die Pizzabackvorrichtung wenigstens teilweise aus Edelstahl ausgebildet ist.

12. Pizzabackvorrichtung nach einem der Ansprüche 5 bis 11,
**dadurch gekennzeichnet,**
**dass** der Griff (7) wenigstens eine Verlängerung (73) aufweist, die an wenigstens einer Halterung (74) am Griff (7) festgelegt werden kann.

## Claims

1. A pizza baking device (1) for use in a fireplace, comprising a frame base plate (2) on which adjustable feet (3) supporting said base plate are adjustably fastened, comprising a heat storage plate frame (4) which rests removably on the frame base plate and is supported by said base plate, wherein the heat storage plate frame (4) serves to supportingly receive a heat storage plate (5) or a grill plate (6).

2. The pizza baking device according to claim 1,
**characterised in that** the adjustable feet (3) are adjustable in their length and/or in their position on the frame base plate (2), wherein elongate holes (21) are formed for this purpose in the frame base plate, at which the adjustable feet can be fixed by means of a clamping or screw connection (31).

3. The pizza baking device according to claim 1 or 2, **characterised in that** at their end (33) the adjustable feet (3) have in particular L-shaped extensions (32) projecting away from said end, wherein these extensions on the adjustable feet are rotatable about the vertical axis (34) and in particular are configured to be fixable with respect to the adjustable feet (3) by means of a lock nut (35).

4. The pizza baking device according to any one of claims 1 to 3, **characterised in that** at least one adjustable foot (3) is adjustable in its length by means of a screw thread, which can be fixed on the frame base plate (2) in particular by means of the clamping or screw connection (31) in cooperation with the elongate holes (21), wherein the adjustable foot (3) is at least partially formed by a threaded rod (36).

5. The pizza baking device according to any one of the preceding claims, **characterised in that** a handle receptacle (71) is formed in the heat storage plate frame (4) and/or the frame base plate (2), in which a handle (7) provided for this purpose can be inserted for lifting the heat storage plate frame (4) or the frame base plate (2) or the frame base plate with the heat storage plate frame located thereon (2 and 4).

6. The pizza baking device according to claim 5,
**characterised in that** the handle receptacle (71) is formed by a sleeve into which a rod-shaped extension (72) provided on the handle is inserted.

7. The pizza baking device according to any one of the preceding claims, **characterised in that** the heat storage plate (5) is formed by a steatite plate.

8. The pizza baking device according to any one of claims 5 to 7, **characterised in that** on the rearward side (11) this is configured to be tapering towards the middle with flattened areas (12).

9. The pizza baking device according to any one of the preceding claims, **characterised in that** the heat storage plate frame (4) and/or the frame base plate (2) has an edging (41, 22) for securing the heat storage plate (5) or the heat storage plate frame (4) against lateral slippage.

10. The pizza baking device according to any one of the preceding claims, **characterised in that** on the rearward side (11) the frame base plate (2) has a projecting formation, in particular in the form of a stop plate (23).

11. The pizza baking device according to any one of the preceding claims, **characterised in that** the pizza baking device is formed at least partially from stainless steel.

12. The pizza baking device according to any one of claims 5 to 11, **characterised in that** the handle (7) has at least one extension (73) which can be fixed on at least one holder (74) on the handle (7).

## Revendications

1. Dispositif de cuisson de pizzas (1) destiné à être utilisé dans un foyer, avec un socle de châssis (2) sur lequel des pieds de réglage (3) portant ce dernier sont fixés de façon réglable,
avec un support de plaque d'accumulation thermique (4), qui repose de façon amovible sur le socle de châssis, le support de plaque d'accumulation thermique (4) servant à recevoir en la soutenant une plaque d'accumulation thermique (5) ou une plaque de grill (6).

2. Dispositif de cuisson de pizzas selon la revendication 1, **caractérisé en ce que**,
les pieds de réglage (3) sont réglables dans leur longueur et/ou de leur position sur le socle de châssis (2) à cet effet, des trous oblongs (21) sur lesquels les pieds de réglage sont susceptibles d'être calés au moyen d'un assemblage par serrage ou par vis (31) étant réalisés dans le socle de châssis.

3. Dispositif de cuisson de pizzas selon la revendication 1 ou 2, **caractérisé en ce que** les pieds de réglage (3) comportent sur leur extrémité (33) des prolongements (32), notamment en forme de L saillant à partir de ces derniers, ceux-ci étant réalisés en étant réglables en rotation autour de l'axe vertical (34) par rapport aux pieds de réglage (3) et notamment au moyen d'un contre-écrou (35).

4. Dispositif de cuisson de pizzas selon l'une quelconque des revendications 1 à 3, **caractérisé en ce qu'**au moins un pied de réglage (3) est susceptible d'être réglé dans sa longueur par un filetage de vis qui peut se caler sur le socle de châssis (2) notamment à l'aide de l'assemblage par serrage ou par vis (31), en coopération avec les trous oblongs (21), le pied de réglage (3) étant réalisé au moins en partie par une tige filetée (36).

5. Dispositif de cuisson de pizzas selon l'une quelconque des revendications précédentes,
**caractérisé en ce qu'**un logement de poignée (71), dans lequel peut s'introduire une poignée (7) prévue à cet effet est réalisé dans le support de plaque d'accumulation thermique (4) et/ou dans le socle de châssis (2), pour relever le support de plaque d'accumulation thermique (4) ou le socle de châssis (2) avec le support de plaque d'accumulation thermique (2 et 4) reposant dessus.

6. Dispositif de cuisson de pizzas selon la revendication 5, **caractérisé en ce que** le logement de poignée (71) est réalisé par une douille dans laquelle on introduit un prolongement (72) en forme de barre prévu sur la poignée.

7. Dispositif de cuisson de pizzas selon l'une quelconque des revendications précédentes **caractérisé en ce que** la plaque d'accumulation thermique est réalisée par une plaque en stéatite.

8. Dispositif de cuisson de pizzas selon l'une quelconque des revendications 5 à 7, **caractérisé en ce qu'**il est réalisé sur la face arrière (11) en se rétrécissant vers le centre avec des méplats (12) .

9. Dispositif de cuisson de pizzas selon l'une quelconque des revendications précédentes,
**caractérisé en ce que** le support de plaque d'accumulation thermique (4) et/ou le socle de châssis (2) comporte un rebord (41, 22) pour bloquer la plaque d'accumulation thermique (5) ou le support de plaque d'accumulation thermique (4) contre un glissement latéral.

10. Dispositif de cuisson de pizzas selon l'une quelconque des revendications précédentes,
**caractérisé en ce que** le socle de châssis (2) comporte sur la face arrière (11) un façonnage saillant, notamment sous forme d'une plaque de butée (23).

11. Dispositif de cuisson de pizzas selon l'une quelconque des revendications précédentes,
**caractérisé en ce que** le dispositif de cuisson de pizzas est réalisé au moins en partie en acier fin.

12. Dispositif de cuisson de pizzas selon l'une quelconque des revendications 5 à 11, **caractérisé en ce que** la poignée (7) comporte au moins une rallonge (73) qui peut être calée sur la poignée (7) sur au moins une attache (74).
